# EUROPEAN PATENT SPECIFICATION

(11) **EP 3 828 010 B1**
(45) Date of publication and mention of the grant of the patent: **07.01.2026**
(21) Application number: 20210436.0
(22) Date of filing: 27.11.2020
(51) Int. Cl.: B60C 11/03, B60C 11/12

(54) **PNEUMATIC TYRE**
LUFTREIFEN
PNEUMATIQUE

(30) Priority: 29.11.2019 IT 201900022473
(43) Date of publication of application: 02.06.2021
(73) Proprietor: Bridgestone Europe NV/SA, 1930 Zaventem (BE)
(72) Inventor: Ruggiero, Davy, 00128 Rome (IT); Maggi, Marco Andrea, 00128 Rome (IT); Del Guercio, Gerardo, 00128 Rome (IT)
(74) Representative: Marchetti, Alessio

(56) References cited:
- EP-A1- 3 441 241
- WO-A1-2018/101933
- WO-A1-2019/020231
- US-A1- 2011 290 393

## Description

### TECHNICAL SECTOR

The present invention relates to a pneumatic tyre, in particular of the winter type.

### PRIOR ART

As is known, a pneumatic tyre comprises a toroidal carcass, which is preferably comprised of a single carcass ply that supports an annular tread.

The tread is provided with an upper sliding surface intended to come into contact with the road surface and the tread pattern (i.e., the overall structure of the tread) preferably includes (but in a non-exclusive manner) a number of lateral grooves that define channels which allow water to flow towards the outside of the pneumatic tyre and/or circumferential grooves arranged parallel to one another with a certain pitch.

The lateral grooves form an angle of inclination measured in relation to an equatorial plane of the pneumatic tyre and are transverse to the circumferential grooves.

The tread pattern also includes a number of portions, wherein the upper surface thereof defines the sliding surface. The tread portions comprise blocks, wherein each thereof is defined between two successive lateral grooves; ribs, wherein each thereof defines a circumferential band of contact with the road surface; and two shoulders that laterally delimit the tread pattern.

Finally, the tread pattern comprises a number of *sipes* defined by slits (or grooves) that are formed within the tread portions and are intended, amongst other things, to increase the flexibility thereof.

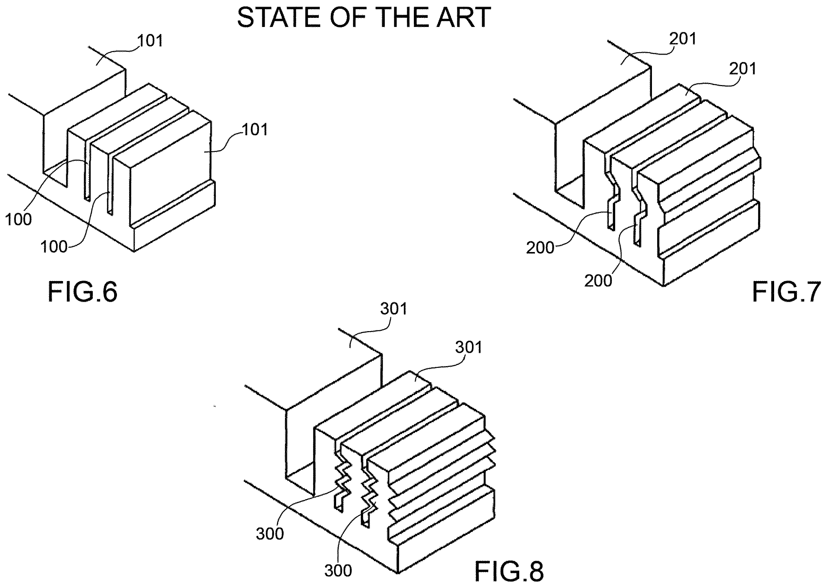

In more detail, according to that shown in Figure 6, it is known to provide linear sipes (also known as 2D sipes), indicated with 100, and having two flat surfaces facing each other and having a constant cross section in the radial direction of the respective tread portion 101. Further, as shown in Figure 7, it is known to provide sipes (also known as 3D sipes), indicated with 200 and having two inclined surfaces facing one another, and having substantially complementary shapes in the radial direction of the relative tread portion 201. Finally, according to that shown in Figure 8, it is known to provide sipes, indicated with 300 and having two zig-zag surfaces, facing one another and having substantially complementary shapes in the radial direction of the relative tread portion 301. Pneumatic tyres of the winter type, in order to increase the adherence of the pneumatic tyre while driving on snow-covered road surfaces, usually comprise a considerable number of sipes. The deformation that the sipes undergo in contact with the snowpack tends to form many edges on the surface of the tread portion that help to gouge the snow, and therefore to increase the grip of the pneumatic tyre on the snow-covered road surface.

EP3441241 discloses a pneumatic vehicle tyre having a tread strip with tread pattern positives, such as tread blocks or tread strips, which are delimited by grooves and which are provided with incisions, which extend parallel to one another in plan view and at an angle deviating by up to 45° from the transverse direction, with a width at the tread strip periphery of 0.4 mm to 0.8 mm, wherein the incisions at the surface of the tread pattern positives are each delimited by two incision edges, from each of which a respective incision wall bounding the incisions in the interior extends, wherein at least one projection locally narrowing the respective incision is formed on the one incision wall and a corresponding depression is formed on the other incision wall for each projection, wherein the incision walls are otherwise unstructured

WO2018101933A1 discloses a tire tread including one or more lateral sipes arranged within the tread. As each such lateral sipe extends outward from within the tread thickness and towards the outer, ground-engaging side of the tread, the lateral sipe is inclined towards the intended direction of tire rotation.

US2011290393 discloses a tread band for a tire comprising a plurality of elements in relief, each element in relief having a contact face and lateral faces, at least some of these elements in relief having at least one incision opening onto two of the said lateral faces, this incision being delimited by a first face and a second face, these first and second faces each comprising projections, each projection of the first face being arranged on the said face so that it can collaborate through contact with a first projection and a second projection on the second face opposite

Increasingly felt, however, is the need to provide pneumatic tyres of the winter type that are capable of ensuring maximum traction under acceleration and, at the same time, optimal braking action on snow-covered surfaces.

### DESCRIPTION OF THE INVENTION

The aim of the present invention is therefore to provide a pneumatic tyre, in particular of the winter type, that is free from the disadvantages of the state of the art and that is, in particular, easy and inexpensive to manufacture.

According to the present invention, a pneumatic tyre is provided, in particular of the winter type, as set forth in the appended claims.

### BRIEF DESCRIPTION OF THE DRAWINGS

The present invention will now be described with reference to the attached drawings, which show an exemplary, non-limiting embodiment, wherein:
- Figure 1 is a perspective view of a pneumatic tyre, in particular of the winter type, implemented according to the present invention;
- Figures 2 and 3 show embodiments, which are alternatives to one another, of a sipe of the tread of Figure 1;
- Figure 4 schematically shows the results of an experimental analysis performed for a portion of the tread of Figure 1;
- Figure 5 schematically shows the rolling, on a road surface, of a pneumatic tyre manufactured according to the present invention; and
- Figures 6 to 8 show embodiments, which are alternatives to one another, of a sipe of a tread manufactured according to the state of the art.

### PREFERRED EMBODIMENTS OF THE INVENTION

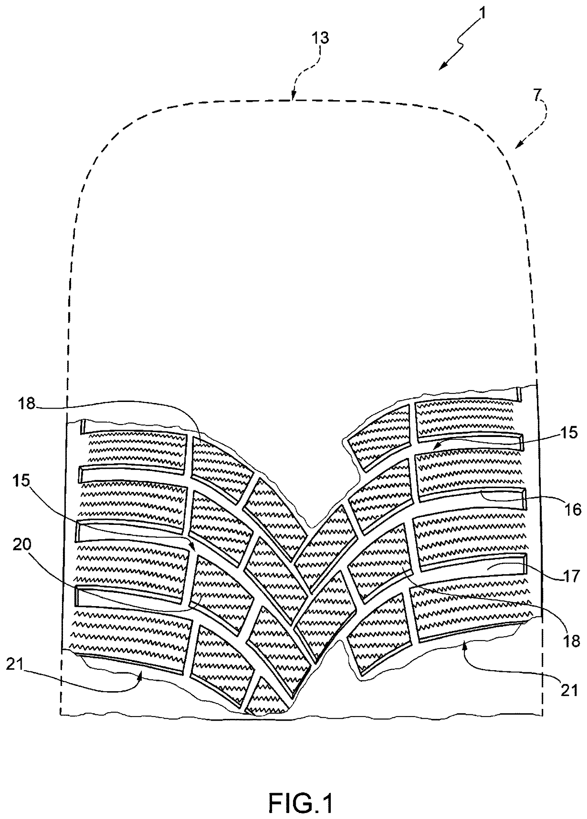

In Figure 1, the numeral 1 denotes, in the entirety thereof, a pneumatic tyre, preferably (but not exclusively) of the winter or all-season type. The pneumatic tyre 1 comprises a tread 7 preferably (but not exclusively) supported by a toroidal carcass.

The tread 7 is provided with an upper sliding surface 13 that is intended to come into contact with the road surface. The tread pattern (i.e., the overall structure of the tread 7) comprises a number of lateral grooves 15 that define channels that allow water to flow towards the outside of the pneumatic tyre 1. The lateral grooves 15 form an angle of inclination measured in relation to an equatorial plane of the pneumatic tyre 1. The lateral grooves 15 have a substantially U shape with two lateral surfaces 16, facing one another and that are substantially planar; and a portion 17 of the lower surface, interposed between the two lateral surfaces 16 with a flat or curved shape.

The tread pattern furthermore comprises a number of tread portions. The portions of the tread comprise blocks 18, wherein the upper surface thereof defines the sliding surface, or in contact with the road surface, 13; wherein each block 18 is defined between two successive lateral grooves 15. Finally, the tread portions comprise two shoulders 21 that laterally delimit the tread pattern. The tread portions 18, 21 are laterally delimited (i.e., on the periphery or perimeter thereof) by the grooves 15.

Each tread portion 18, 21 is laterally delimited by respective lateral surfaces 16 and defines the upper sliding surface 13.

According to a variant, not shown, in the case of a pneumatic tyre of the summer type, the tread pattern also comprises a number of circumferential grooves, which are arranged parallel to one another and with a certain pitch, are transverse to the lateral grooves 15 and have a substantially U shape with two substantially planar lateral surfaces facing one another; and a portion of the lower surface interposed between the two lateral surfaces with a flat or curved shape. In this case, the tread portions may further comprise a number of ribs wherein the upper surface thereof also defines the sliding surface 13; wherein each rib defines a circumferential band in contact with the road surface and is defined between two successive circumferential grooves.

The term tread portion 18,21 is therefore intended to refer to that part of the tread, irrespective of the specific design thereof, that is suitable for coming into contact with the road surface during the use of the pneumatic tyre.

Finally, the tread pattern comprises a number of sipes 20 defined by slits (grooves) that can be implemented within any portion of the tread 18, 21. The sipes 20 have a longitudinal extension (length) within the tread portion 18, 21. Said longitudinal extension is preferably in a substantially transverse direction in relation to the equatorial plane of the pneumatic tyre.

Preferably, said longitudinal extension is parallel to the respective tread portion 18,21, it therefore follows the geometry of curvature.

Alternatively said longitudinal extension can be in any direction in relation to the equatorial plane of the pneumatic tyre. The more the longitudinal extension of the sipes 20 moves away from a transverse direction in relation to the equatorial plane of the pneumatic tyre the more the effect described below will decrease on the traction and braking of the pneumatic tyre, favoring instead the dynamic behavior of the pneumatic tyre due to transverse stresses of the same.

In particular, the sipes 20 extend in a radial direction along one of the respective median planes PM thereof; such median plane extending substantially along the radial direction of the respective tread portion 18, 21. The depth or height of the sipe 20 refers to the radial extension thereof.

The term median plane PM refers to that plane passing through the radially outer part of the sipe at the surface 13 and the radially internal part of the sipe at the deepest part of the tread.

The sipes 20 have dimensions (width/thickness and depth) that are reduced in comparison to the dimensions of the lateral grooves 15 (or possibly of the circumferential grooves).

The portion 18, 21 of the tread has a height of between 6 and 12 mm; preferably, the portion 18, 21 of the tread has a height equal to 8 mm. The height of the portion 18, 21 of the tread is defined by the radial dimension thereof between the sliding surface 13 and the lowest point (i.e., the furthest from the sliding surface 13) of the adjacent lateral grooves 15.

In contrast the sipe 20 has a height of between 4 and 10 mm; preferably, the sipe 20 has a height equal to 6 mm. The height or depth of the sipe 20 is defined by the radial dimension thereof between the sliding surface 13 and the lowest point (i.e., the furthest from the sliding surface 13) of a bottom surface of the sipe 20 itself (as better described in the discussion that follows).

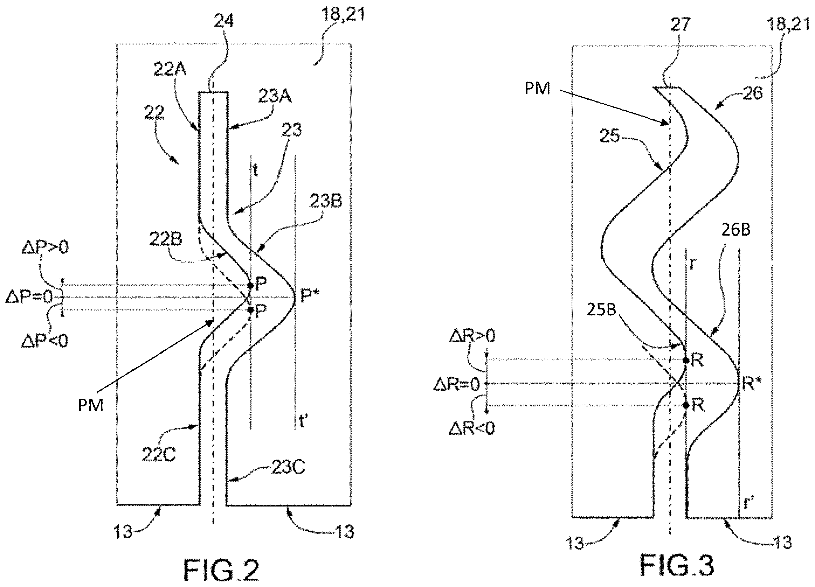

According to a first variant shown in Figure 2, under unloaded conditions of the pneumatic tyre, i.e., without any applied load, therefore with the pneumatic tyre not in use, and mounted on a standard ETRTO test rim and at nominal inflation pressure, the sipe 20 has a non-constant thickness along the extension thereof; in fact, the sipe 20 has, in the radial direction of the respective tread portion 18, 21, a non-constant thickness. In more detail, the sipe 20 is defined by a surface 22 facing a surface 23; wherein the surfaces 22 and 23 are mutually connected by means of a bottom surface 24 that is preferably flat, or alternatively rounded.

The surface 22 is divided into three portions. In particular, the surface 22 is divided into a flat section 22A connected to the bottom surface 24, an intermediate section 22B and a flat terminal section 22C arranged in proximity to the sliding surface 13.

Preferably, the intermediate section 22B has a radial extension (i.e., in the radial direction of the respective tread portion 18, 21) of between 20% and 40% of the entire radial extension of the sipe 20. According to a first embodiment, the sections 22A, 22B, 22C have substantially the same radial extension.

The intermediate section 22B is defined by a curved surface 22B. The surface 22B is a convex surface, in particular with the convexity facing towards the cavity of the sipe 20.

Preferably, the surface 22B is a surface with sinusoidal or partially sinusoidal geometry.

In Figure 2 the tangent to the outer surface 22B, at a maximum point P, is indicated with the letter t.

The surface 23 has a profile that is substantially complementary to the surface 22. The surface 23 is in fact also divided into three portions. In particular, the surface 23 is divided into a flat section 23A connected to the bottom surface 24, an intermediate section 23B and a terminal flat section 23C arranged in proximity to the sliding surface 13.

Preferably, the intermediate section 23B has a radial extension (i.e., in the radial direction of the respective portion 18, 21 of the tread) of between 20% and 40% of the entire radial extension of the sipe 20. According to an initial embodiment, the sections 23A, 23B, 23C have substantially the same radial extension.

The intermediate section 23B is defined by a curved and concave surface (with the concavity facing towards the cavity of the sipe 20). The intermediate section 23B has a profile that is substantially complementary to the intermediate section 22B. Preferably, the section 23B has a surface with sinusoidal or partially sinusoidal geometry.

Preferably, the sections 22B and 23B have connections that are produced with radii of curvature in such a way as to avoid sharp edges, both in order to simplify the implementation thereof and to optimize performance.

A geometry that is preferably sinusoidal or partially sinusoidal is particularly effective in ensuring contact between the surfaces of the sections 22B and 23B in a gradual manner, starting from small deformations of the pneumatic tyre.

In Figure 2, the tangent to the outer surface 22B, at a minimum point P*, is indicated with the letter t'.

In Figure 2, the median plane PM of the sipe 20 is indicated with PM. This median plane PM - or median axis of the sipe 20 in cross section to the longitudinal extension (length) of the sipe - extends from a centered position in relation to the thickness of the sipe 20 at the surface 13 to a centered position in relation to the thickness of the sipe at the bottom surface 24.

Both the maximum point P and the minimum point P* are located on the same side of the median plane PM of the sipe.

In this manner the overlapping of the surfaces of the sections 22B and 23B in the radial direction is ensured, beginning with an unloaded pneumatic tyre. With the pneumatic tyre loaded and/or in use, these surfaces can enter into contact in a gradual manner starting with small loads or stresses, ensuring better "interlocking" between the surfaces of the sipe 20, in other words, the interlocking upon closure of the sipe 20 in order to increase the rigidity of the tread portion 18, 21.

Preferably the surfaces 22 and 23 have the same geometry but are shifted in relation to one another along the direction of the median plane PM of the sipe or along the radial direction of the tread portion 18, 21.

Preferably, the surfaces 22 and 23 have a complementary geometry to one another, wherein the distance between the one surface 22 and the other 23 would be constant along the entire depth of the sipe 20, but instead are shifted in relation to one another along the direction of the median plane PM of the sipe 20 or along the radial direction of the tread portion 18, 21.

In other words, without the translation, the distance between the one surface 22 and the other 23, measured at right angles to the surface 22,23 itself, would be constant along the entire depth of the sipe 20

From such a translation there derives, in contrast, the fact that the thickness of the sipe 20 is not constant along the radial extension (along the depth) of the sipe 20 as depicted in Figure 2.

Along the longitudinal extension of the sipe 20 (along the length thereof), the thickness thereof does not vary and the geometry of the surfaces 22 and 23 remains identical.

According to a first variant, the maximum point P is arranged below the minimum point P* in the radial direction (where the term below means closer to the sliding surface 13 in a radial direction in relation to the point P*). According to a second variant, the maximum point P is arranged above the minimum point P* in the radial direction (where the term above means closer to the bottom surface 24 in a radial direction in relation to the point P* or further from the sliding surface 13 in a radial direction in relation to the point P*).

Also indicated in Figure 2, with ΔP, is the distance in a radial direction (i.e., in the radial direction of the respective portion 18, 21 of the tread) between the points P* and P.

Starting from the reference condition, wherein the magnitude ΔP is zero (i.e., the maximum point P and the minimum point P* are aligned and at the same height of the sipe 20), by convention it is defined that the magnitude AP assumes negative values when the point P is arranged below the point P* (wherein the term below means closer to the sliding surface 13 in a radial direction in relation to the point P*) and assumes positive values when the point P is arranged above the point P* (wherein the term above means closer to the bottom surface 24 in a radial direction in relation to the point P*, or further from the sliding surface 13 in a radial direction in relation to the point P*).

The magnitude ΔP is non-zero. The magnitude ΔP is between -0.4 and +0.4 mm; preferably, the magnitude ΔP is between -0.2 and +0.2 mm.

Preferably the extension of the translation by which the surfaces 22 and 23 are shifted in relation to one another along the direction of the median plane PM of the sipe 20 or along the radial direction of the tread portion 18, 21 is equal to the magnitude ΔP.

The sipe 20 thus has a uniform thickness at an initial section defined by the surfaces 22A and 23A and an end section defined by the surfaces 22C and 23C; and a variable thickness at an intermediate section defined by the surfaces 22B and 23B. According to a preferred variant, the sipe 20 has a thickness at the initial section and at the terminal section of between 0.25 and 0.55 mm; preferably, the sipe 20 has a thickness at the initial section and at the terminal section equal to 0.4 mm.

According to a second variant illustrated in Figure 3, under unloaded conditions of the pneumatic tyre, i.e., without any applied load, therefore with the pneumatic tyre when not in use, and mounted on a standard ETRTO test rim and at nominal inflation pressure, the sipe 20 has a non-constant thickness along the extension thereof; in fact, the sipe 20 has, in the radial direction of the respective tread portion 18, 21, a non-constant thickness. In more detail, the sipe 20 is defined by a surface 25 with a corrugated (or zig-zag) profile facing a surface 26 with a corrugated (or zig-zag) profile; wherein the surfaces 25 and 26 are mutually connected by means of a bottom surface 27 that is preferably flat or, alternatively, rounded.

The surfaces 25 and 26 are defined by a plurality of internal sections 25B, 26B arranged in succession and connected to one another, only one thereof will be described in detail in the discussion that follows.

The surface 25 is provided with an internal section 25B defined by a convex surface, in particular with the convexity facing towards the cavity of the sipe 20.

Preferably, the surface 25B is a surface with sinusoidal or partially sinusoidal geometry.

In Figure 3, the tangent to the surface 25B at a maximum point R is indicated with r.

The surface 26 has a profile that is substantially complementary to the surface 25. The surface 26 is provided with an internal section 26B defined by a concave surface (with the concavity facing the cavity of the sipe 20) and directly facing the interior section 25B. The internal section 26B has a profile that is substantially complementary to the internal section 25B.

Preferably, the surface 26B is a surface with sinusoidal or partially sinusoidal geometry.

Geometry that is preferably sinusoidal or partially sinusoidal is particularly effective in ensuring contact between the surfaces of the sections 25B and 26B in a gradual manner starting from small deformations of the pneumatic tyre.

In Figure 3, the tangent to the surface 26B at a maximum point R* is indicated with r'.

In Figure 3, the median plane of the sipe 20 is shown with PM. This median plane PM - or median axis of the sipe 20 in cross section to the longitudinal extension (length) of the sipe - extends from a centered position in relation to the thickness of the sipe 20 at the surface 13 to a centered position in relation to the thickness of the sipe at the bottom surface 27.

Both the maximum point R and the minimum point R* are located on the same side of the median plane PM of the sipe.

In this manner the overlapping of the surfaces of the sections 25B and 26B in the radial direction is ensured, beginning with an unloaded pneumatic tyre. With the pneumatic tyre loaded and/or in use, these surfaces can enter into contact in a gradual manner starting with small loads or stresses, ensuring better "interlocking" between the surfaces of the sipe 20, in other words, the interlocking upon closure of the sipe 20 in order to increase the rigidity of the tread portion 18, 21.

Preferably the surfaces 25 and 26 have the same geometry but are shifted in relation to one another along the direction of the median plane PM of the sipe 20 or along the radial direction of the tread portion 18, 21.

Preferably, the surfaces 25 and 26 have a complementary geometry to one another, wherein the distance between the one surface 25 and the other 26 would be constant along the entire depth of the sipe 20, but instead are shifted in relation to one another along the direction of the median plane PM of the sipe or along the radial direction of the tread portion 18,21.

In other words, without the translation, the distance between the one surface 25 and the other 26, measured at right angles to the surface 25,26 itself, would be constant along the entire depth of the sipe 20

From such a translation there derives, in contrast, the fact that the thickness of the sipe 20 is not constant along the radial extension (along the depth) of the sipe 20 as depicted in Figure 3.

Along the longitudinal extension of the sipe 20 (along the length thereof), the thickness thereof does not vary and the geometry of surfaces 25 and 26 remains identical.

According to a first variant, the maximum point R is arranged below the minimum point R* in the radial direction (where the term below means closer to the sliding surface 13 in a radial direction in relation to the point R*). According to a second variant, the maximum point R is arranged above the minimum point R* in the radial direction (where the term above means closer to the bottom surface 27 in a radial direction in relation to the point R* or further from the sliding surface 13 in a radial direction in relation to the point R*).

Also indicated in Figure 3 with ΔR is the distance in a radial direction (i.e., in the radial direction of the respective portion 18, 21 of the tread) between the points R* and R.

Starting from the reference condition, wherein the magnitude ΔR is zero (i.e., the maximum point R and the minimum point R* are aligned and at the same height of the sipe 20), by convention it is defined that the magnitude AP assumes negative values when the point R is arranged below the point R* (wherein the term below means closer to the sliding surface 13 in a radial direction in relation to the point R*) and assumes positive values when the point R is arranged above the point R* (wherein the term above means closer to the bottom surface 27 in a radial direction in relation to the point R*, or further from the sliding surface 13 in a radial direction in relation to the point R*).

The magnitude ΔR is non-zero. The magnitude ΔR is between -0.4 and +0.4 mm; preferably, the magnitude ΔR is between -0.2 and +0.2 mm.

For the surfaces 25 and 26, it is therefore possible to define for each pair of internal sections 25B, 26B a respective magnitude ΔR; wherein the magnitudes ΔR of the same sipe 20 are preferably the same (with negative values or positive values) and preferably have uniform dimensions.

Preferably the extension of the translation for which the surfaces 25 and 26 are shifted in relation to one another along the direction of the median plane PM of the sipe 20 or along the radial direction of the tread portion 18,21 is equal to the magnitude ΔR.

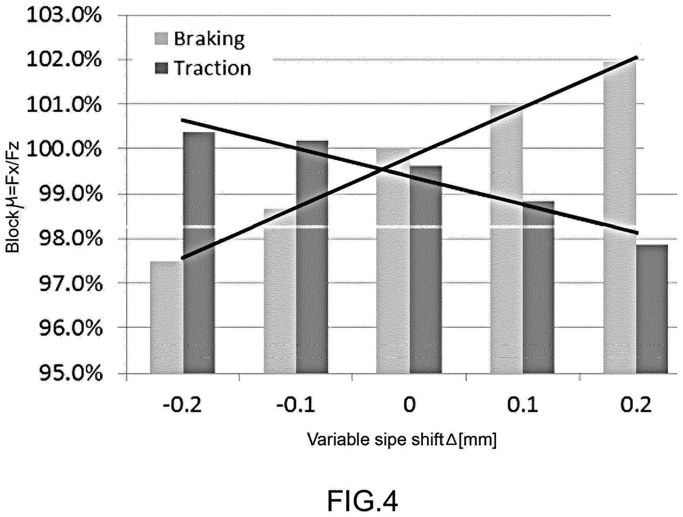

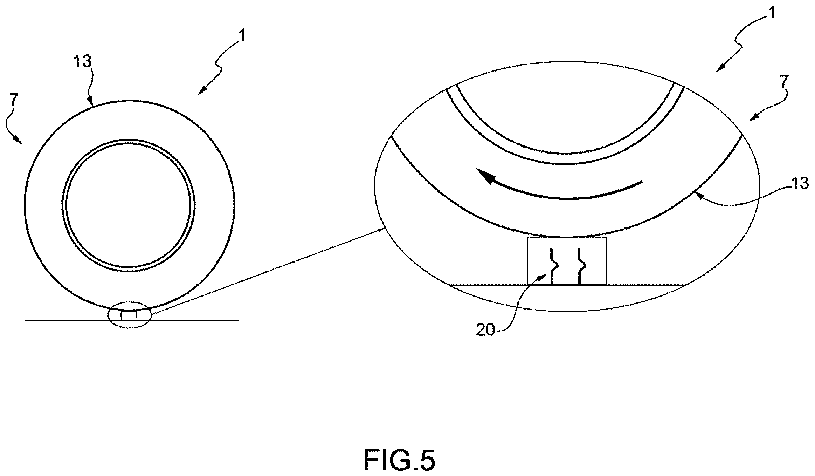

Figure 4 shows the result of an experimental analysis (using the FEM model) performed to evaluate the effects of the variation of the AP and ΔR magnitudes. In particular, the experimental analysis is performed by varying the AP and ΔR magnitudes of a portion 18, 21 of a tread that is running on a road surface, preferably a snow-covered surface, and that is subjected to two forces having the same direction (longitudinal) but opposing senses (braking or traction). As shown in Figure 5, the sipes 20 are arranged such that the peak portions defined by the points P, R are facing in the opposite direction in relation to the direction of rolling of the portion of the pneumatic tyre 1 adjacent to the road plane of the pneumatic tyre 1, but in a direction in the same direction of travel of the pneumatic tyre 1 on the road surface; in the case where the sipes 20 are arranged in the opposite direction, a substantial inversion is witnessed of the traction and braking effects as a function of the variation of the AP and ΔR magnitudes of a tread portion 18, 21.

The result of the experimental analysis is the ratio Fx/Fz between the force of longitudinal friction of the tread portion 18, 21 and the vertical load applied to the tread portion 18, 21 itself. Said Fx/Fz ratio is an indication of the friction force generated by the tread portion 18, 21 on the road surface, preferably a snow-covered surface, and in the sliding direction (braking or traction).

In other words, by varying the magnitudes AP and ΔR it is possible to give priority to the performance of the tread portion 18, 21 in terms of the friction offered in one of the two sliding directions (traction or braking) whilst keeping constant the average performance of the tread portion 18, 21 in terms of overall friction in both of the two sliding directions (in other words, the performance of the tread portion 18, 21 is compromised in the other sliding direction for which there is a worsening of the performance offered). It has been observed experimentally that positive values of the ΔP and ΔR magnitudes make it possible to improve the braking performance, whilst negative values of the ΔP and ΔR magnitudes make it possible to optimize the traction performance.

The invention as described heretofore finds advantageous (but not exclusive) application in pneumatic tyres 1 of the winter type which are provided with a considerable number of sipes 20. The invention described so far can, however, also find advantageous application for pneumatic tyres of the summer or all-season type.

The pneumatic tyre 1, preferably of the winter type, as described heretofore has some advantages. In particular, it is possible to optimize the performance of the pneumatic tyre 1 itself on the snow-covered surfaces during braking and/or traction by differentiating the AP and ΔR magnitudes as a function of those tread areas that are most stressed during braking and traction respectively.

### REFERENCE NUMBERS

- 1: pneumatic tyre
- 7: tread
- 13: sliding surface
- 15: lateral grooves
- 16: lateral surfaces
- 17: portion of the lower surface
- 18: block
- 20: sipe
- 21: lateral shoulders
- 22: surface
- 23: surface
- 24: bottom surface
- 25: surface
- 26: surface
- 27: bottom surface

## Claims

1. Pneumatic tyre (1) comprising an annular tread (7) that is suitable for coming into contact with the road surface, provided with a plurality of tread portions (18, 21) that define a surface (13) in contact with the road surface; and a number of sipes (20) defined by grooves formed within the tread portions (18, 21), which extend along a respective median plane (PM) thereof, this median plane extending along the radial direction of the respective tread portion (18, 21); the sipes (20) have a non-constant thickness along the radial extension thereof and are provided with a first surface (22, 25) having at least a first curved section (22B, 25B) with a maximum point (P, R) and a second surface (23, 26) having at least a second curved section (23B, 26B), facing the first curved section (22B, 25B), with a profile that is substantially complementary to the first curved section (22B, 25B) and having a minimum point (P*, R*); the distance (ΔP, ΔR) along the radial direction between the minimum point (P*, R*) and the maximum point (P, R) being non-zero;
wherein with the pneumatic tyre under unloaded conditions the minimum point (P*, R*) and the maximum point (P, R) are both found on the same side of the median plane (PM) of the sipe (20);
the pneumatic tyre being **characterized in that:**
the first surface (25) has a profile that is substantially complementary to that of the second surface (26); and wherein the first and second surfaces (25, 26) are provided, respectively, with a plurality of first curved sections (25B) with maximum a point (R) and a plurality of second curved sections (26B) with a minimum point (R*).

2. Pneumatic tyre according to claim 1, wherein the maximum point (P, R) is arranged below the minimum point (P*, R*) along the radial direction that is closer to the sliding surface (13) in a radial direction in relation to the minimum point (P*, R*); and wherein the first curved section (22B, 25B) having the maximum point (P, R) is oriented in the same direction of travel of the pneumatic tyre (1) on a road surface in order to optimize the traction performance of the pneumatic tyre (1) on said road surface.

3. Pneumatic tyre according to claim 1, wherein the maximum point (P, R) is arranged above the minimum point (P*, R*) along the radial direction that is further from the sliding surface (13) in a radial direction in relation to the minimum point (P*, R*); and wherein the first curved section (22B, 25B) having the maximum point (P, R) is oriented in the same direction of travel of the pneumatic tyre (1) on a road surface in order to optimize the braking performance of the pneumatic tyre (1) on said road surface.

4. Pneumatic tyre according to any one of the preceding claims, wherein said distance (ΔP, ΔR) in a radial direction is non-zero and between 0 and +0.4 mm; preferably said distance (ΔP, ΔR) is between 0 and +0.2 mm.

5. Pneumatic tyre according to any one of the preceding claims, wherein the tread portion (18, 21) has a height of between 6 and 12 mm, preferably equal to 8 mm; and the sipe (20) has a height of between 4 and 10 mm, preferably equal to 6 mm.

6. Pneumatic tyre according to any one of the preceding claims, wherein the sipe (20) has a substantially uniform thickness at an initial section defined by two flat surfaces (22A, 23A) and at a terminal section defined by two flat surfaces (22C, 23C); and a variable thickness at an intermediate section defined by the first and by the second curved sections (22B, 23B).

7. Pneumatic tyre according to claim 6, wherein the thickness at the initial section and/or at the terminal section is between 0.25 and 0.55 mm; preferably equal to 0.4 mm.

8. Pneumatic tyre according to any one of the preceding claims, wherein the first section (22B, 25B) and/or the second section (23B, 26B) have a radial extension of between 20% and 40% of the entire radial extension of the respective sipe (20).

9. Pneumatic tyre according to any one of the preceding claims, wherein the first surface (22, 25) and/or the second surface (23, 26) are divided into three sections having substantially the same radial extension.

10. Pneumatic tyre according to any one of the preceding claims, wherein the distances (ΔR) along the radial direction between the minimum point (R*) and the maximum point (R) are all greater than zero or else less than zero.

11. Pneumatic tyre according to any one of the preceding claims, wherein the distances (ΔR) along the radial direction between the minimum point (R*) and the maximum point (R) have uniform dimensions.

12. Pneumatic tyre according to any one of the preceding claims, wherein the tread (7) comprises a number of lateral grooves (15) forming an angle of inclination measured in relation to an equatorial plane of the pneumatic tyre (1).

## Patentansprüche

1. Luftreifen (1), umfassend eine ringförmige Lauffläche (7), die zum Inkontaktkommen mit der Straßenoberfläche geeignet ist, die mit einer Vielzahl von Laufflächenabschnitten (18, 21) versehen ist, die eine mit der Straßenoberfläche in Kontakt stehende Oberfläche (13) definieren; und eine Anzahl von Lamellen (20), die durch innerhalb der Laufflächenabschnitte (18, 21) ausgebildete Rillen definiert sind, die sich entlang einer jeweiligen Mittelebene (PM) davon erstrecken, wobei sich diese Mittelebene entlang der radialen Richtung des jeweiligen Laufflächenabschnitts (18, 21) erstreckt; die Lamellen (20) entlang der radialen Erstreckung davon eine nicht konstante Dicke aufweisen und mit einer ersten Oberfläche (22, 25), die mindestens einen ersten gekrümmten Abschnitt (22B, 25B) mit einem Maximalpunkt (P, R) aufweist, und einer zweiten Oberfläche (23, 26), die mindestens einen zweiten gekrümmten Abschnitt (23B, 26B), der dem ersten gekrümmten Abschnitt (22B, 25B) zugewandt ist, mit einem Profil aufweist, das im Wesentlichen komplementär zu dem ersten gekrümmten Abschnitt (22B, 25B) ist und einen Minimalpunkt (P*, R*) aufweist, versehen ist; wobei der Abstand (ΔP, ΔR) entlang der radialen Richtung zwischen dem Minimalpunkt (P*, R*) und dem Maximalpunkt (P, R) ungleich null ist;
wobei sich bei dem Luftreifen unter lastfreien Bedingungen der Minimalpunkt (P*, R*) und der Maximalpunkt (P, R) beide auf der gleichen Seite der Mittelebene (PM) der Lamelle (20) befinden;
wobei der Luftreifen **dadurch gekennzeichnet ist, dass**:
die erste Oberfläche (25) ein Profil aufweist, das im Wesentlichen komplementär zu dem der zweiten Oberfläche (26) ist; und wobei die erste und die zweite Oberfläche (25, 26) jeweils mit einer Vielzahl von ersten gekrümmten Abschnitten (25B) mit einem Maximalpunkt (R) und einer Vielzahl von zweiten gekrümmten Abschnitten (26B) mit einem Minimalpunkt (R*) versehen sind.

2. Luftreifen nach Anspruch 1, wobei der Maximalpunkt (P, R) unterhalb des Minimalpunkts (P*, R*) entlang der radialen Richtung angeordnet ist, was näher an der Gleitoberfläche (13) in einer radialen Richtung in Bezug auf den Minimalpunkt (P*, R*) ist; und wobei der erste gekrümmte Abschnitt (22B, 25B) den Maximalpunkt (P, R) in der gleichen Fahrtrichtung des Luftreifens (1) auf einer Straßenoberfläche ausgerichtet aufweist, um die Traktionsleistung des Luftreifens (1) auf der Straßenoberfläche zu optimieren.

3. Luftreifen nach Anspruch 1, wobei der Maximalpunkt (P, R) oberhalb des Minimalpunkts (P*, R*) entlang der radialen Richtung angeordnet ist, was weiter von der Gleitoberfläche (13) entfernt in einer radialen Richtung in Bezug auf den Minimalpunkt (P*, R*) ist; und wobei der erste gekrümmte Abschnitt (22B, 25B), der den Maximalpunkt (P, R) aufweist, in der gleichen Fahrtrichtung des Luftreifens (1) auf einer Straßenoberfläche ausgerichtet ist, um die Bremsleistung des Luftreifens (1) auf der Straßenoberfläche zu optimieren.

4. Luftreifen nach einem der vorstehenden Ansprüche, wobei der Abstand (ΔP, ΔR) in einer radialen Richtung ungleich null ist und zwischen 0 und +0,4 mm liegt; vorzugsweise der Abstand (ΔP, ΔR) zwischen 0 und +0,2 mm liegt.

5. Luftreifen nach einem der vorstehenden Ansprüche, wobei der Laufflächenabschnitt (18, 21) eine Höhe zwischen 6 und 12 mm, vorzugsweise gleich 8 mm, aufweist; und die Lamelle (20) eine Höhe zwischen 4 und 10 mm, vorzugsweise gleich 6 mm aufweist.

6. Luftreifen nach einem der vorstehenden Ansprüche, wobei die Lamelle (20) an einem durch zwei flache Oberflächen (22A, 23A) definierten Anfangsabschnitt und an einem durch zwei flache Oberflächen (22C, 23C) definierten Endabschnitt eine im Wesentlichen gleichmäßige Dicke; und eine variable Dicke an einem durch den ersten und den zweiten gekrümmten Abschnitt (22B, 23B) definierten Zwischenabschnitt aufweist.

7. Luftreifen nach Anspruch 6, wobei die Dicke an dem Anfangsabschnitt und/oder an dem Endabschnitt zwischen 0,25 und 0,55 mm; vorzugsweise gleich 0,4 mm ist.

8. Luftreifen nach einem der vorstehenden Ansprüche, wobei der erste Abschnitt (22B, 25B) und/oder der zweite Abschnitt (23B, 26B) eine radiale Ausdehnung zwischen 20 % und 40 % der gesamten radialen Ausdehnung der jeweiligen Lamelle (20) aufweisen.

9. Luftreifen nach einem der vorstehenden Ansprüche, wobei die erste Oberfläche (22, 25) und/oder die zweite Oberfläche (23, 26) in drei Abschnitte unterteilt sind, die im Wesentlichen die gleiche radiale Ausdehnung aufweisen.

10. Luftreifen nach einem der vorstehenden Ansprüche, wobei die Abstände (ΔR) entlang der radialen Richtung zwischen dem Minimalpunkt (R*) und dem Maximalpunkt (R) alle größer als null oder auch kleiner als null sind.

11. Luftreifen nach einem der vorstehenden Ansprüche, wobei die Abstände (ΔR) entlang der radialen Richtung zwischen dem Minimalpunkt (R*) und dem Maximalpunkt (R) gleichmäßige Abmessungen aufweisen.

12. Luftreifen nach einem der vorstehenden Ansprüche, wobei die Lauffläche (7) eine Anzahl seitlicher Rillen (15) umfasst, die einen Neigungswinkel ausbilden, der in Bezug auf eine Äquatorialebene des Luftreifens (1) gemessen wird.

## Revendications

1. Pneu pneumatique (1) comprenant une bande de roulement (7) annulaire qui est adaptée pour entrer en contact avec la surface de route, pourvue d'une pluralité de parties de bande de roulement (18, 21) qui définissent une surface (13) en contact avec la surface de route ; et un certain nombre de lamelles (20) définies par des rainures formées à l'intérieur des parties de bande de roulement (18, 21), qui s'étendent le long d'un plan médian (PM) respectif de celles-ci, ce plan médian s'étendant le long de la direction radiale de la partie de bande de roulement (18, 21) respective ; les lamelles (20) ont une épaisseur non constante le long de l'extension radiale de celles-ci et sont pourvues d'une première surface (22, 25) ayant au moins une première section incurvée (22B, 25B) avec un point maximum (P, R) et une seconde surface (23, 26) ayant au moins une seconde section incurvée (23B, 26B), faisant face à la première section incurvée (22B, 25B), avec un profil qui est sensiblement complémentaire à la première section incurvée (22B, 25B) et ayant un point minimum (P*, R*) ; la distance (ΔP, ΔR) le long de la direction radiale entre le point minimum (P*, R*) et le point maximum (P, R) étant non nulle ;
dans lequel, avec le pneu pneumatique dans des conditions non chargées, le point minimum (P*, R*) et le point maximum (P, R) se trouvent tous deux du même côté du plan médian (PM) de la lamelle (20) ;
le pneu pneumatique étant **caractérisé en ce que** :
la première surface (25) a un profil qui est sensiblement complémentaire à celui de la seconde surface (26) ; et dans lequel les première et seconde surfaces (25, 26) sont pourvues, respectivement, d'une pluralité de premières sections incurvées (25B) avec un point maximum (R) et d'une pluralité de secondes sections incurvées (26B) avec un point minimum (R*).

2. Pneu pneumatique selon la revendication 1, dans lequel le point maximum (P, R) est disposé au-dessous du point minimum (P*, R*) le long de la direction radiale qui est plus proche de la surface de coulissement (13) dans une direction radiale par rapport au point minimum (P*, R*) ; et dans lequel la première section incurvée (22B, 25B)ayant le point maximal (P, R) est orientée dans la même direction de déplacement du pneu pneumatique (1) sur une surface de route afin d'optimiser les performances de traction du pneu pneumatique (1) sur ladite surface de route.

3. Pneu pneumatique selon la revendication 1, dans lequel le point maximum (P, R) est disposé au-dessus du point minimum (P*, R*) le long de la direction radiale qui est plus éloignée de la surface de coulissement (13) dans une direction radiale par rapport au point minimum (P*, R*) ; et dans lequel la première section incurvée (22B, 25B)ayant le point maximal (P, R) est orientée dans la même direction de déplacement du pneu pneumatique (1) sur une surface de route afin d'optimiser les performances de freinage du pneu pneumatique (1) sur ladite surface de route.

4. Pneu pneumatique selon l'une quelconque des revendications précédentes, dans lequel ladite distance (ΔP, ΔR) dans une direction radiale est non nulle et comprise entre 0 et +0,4 mm ; de préférence, ladite distance (ΔP, ΔR) est comprise entre 0 et +0,2 mm.

5. Pneu pneumatique selon l'une quelconque des revendications précédentes, dans lequel la partie de bande de roulement (18, 21) a une hauteur comprise entre 6 et 12 mm, de préférence égale à 8 mm ; et la lamelle (20) a une hauteur comprise entre 4 et 10 mm, de préférence égale à 6 mm.

6. Pneu pneumatique selon l'une quelconque des revendications précédentes, dans lequel le lamelle (20) a une épaisseur sensiblement uniforme au niveau d'une section initiale définie par deux surfaces planes (22A, 23A) et au niveau d'une section terminale définie par deux surfaces planes (22C, 23C) ; et une épaisseur variable au niveau d'une section intermédiaire définie par les première et seconde sections incurvées (22B, 23B).

7. Pneu pneumatique selon la revendication 6, dans lequel l'épaisseur au niveau de la section initiale et/ou au niveau de la section terminale est comprise entre 0,25 et 0,55 mm ; de préférence égale à 0,4 mm.

8. Pneu pneumatique selon l'une quelconque des revendications précédentes, dans lequel la première section (22B, 25B) et/ou la seconde section (23B, 26B) ont une extension radiale comprise entre 20 % et 40 % de l'extension radiale totale de la lamelle (20) respective.

9. Pneu pneumatique selon l'une quelconque des revendications précédentes, dans lequel la première surface (22, 25) et/ou la seconde surface (23, 26) sont divisées en trois sections ayant sensiblement la même extension radiale.

10. Pneu pneumatique selon l'une quelconque des revendications précédentes, dans lequel les distances (ΔR) le long de la direction radiale entre le point minimum (R*) et le point maximum (R) sont toutes supérieures à zéro ou bien inférieures à zéro.

11. Pneu pneumatique selon l'une quelconque des revendications précédentes, dans lequel les distances (ΔR) le long de la direction radiale entre le point minimum (R*) et le point maximum (R) ont des dimensions uniformes.

12. Pneu pneumatique selon l'une quelconque des revendications précédentes, dans lequel la bande de roulement (7) comprend un certain nombre de rainures latérales (15) qui forment un angle d'inclinaison mesuré par rapport à un plan équatorial du pneu pneumatique (1).
